# EUROPEAN PATENT APPLICATION

(11) **EP 4 201 647 A1**
(43) Date of publication of application: **28.06.2023**
(21) Application number: 21217518.6
(22) Date of filing: 23.12.2021
(51) Int. Cl.: B29C 64/118, B29C 64/393, B29C 64/209, B29C 64/364, B33Y 10/00, B33Y 30/00, B33Y 50/00, B22F 12/00

(54) **EXTRUSION BASED ADDITIVE MANUFACTURING APPARATUS HAVING TEMPERATURE SENSOR AT PRINTHEAD**

(71) Applicant: Bond High Performance 3D Technology B.V., 7521 PK Enschede (NL)
(72) Inventor: Bartelds, Jan Teun, 7521 PK Enschede (NL); Hjortnaes, Thomas, 7521 PK Enschede (NL); Blaauw, Jurjen Bate, 7521 PK Enschede (NL); Idema, Sjoerd, 7521 PK Enschede (NL)
(74) Representative: IPecunia

(57) **Abstract**

Extrusion based additive manufacturing apparatus comprising:
- a build room adapted to be heated to a temperature of at least 80 °C,
- a temperature control system to control the gas temperature inside the build room,
- a base located in the build room to support an object to be manufactured,
- a printhead located in the build room for depositing modelling material to build the object to be manufactured, the printhead comprising a heating device to liquify the modelling material fed to the printhead in an initial solid state,
wherein the printhead and/or the base are coupled to a 3D positioning system to move the printhead and/or the base relative to each other, allowing to deposit tracks of modelling material to build the object to be manufactured,
wherein the apparatus furthermore comprises:
at least one temperature sensor arranged at the printhead to capture the temperature in the vicinity of the printhead and thus the vicinity of the tracks deposited by the printhead.

## Description

The invention relates to an extrusion based additive manufacturing apparatus for manufacturing objects inside a build room at a temperature above 80 °C.

In additive manufacturing objects are formed by layering modelling material in a controlled manner such that a desired three dimensional shaped object can be created. Very often the printer used for this process has a two or three dimensionally moveable printhead which dispenses the modelling material, while the printhead is moved over previously deposited tracks of the modelling material.

The object to be printed can be placed on a base. The printhead and/or the base are/is movable in a three dimensional space such that the printhead and the object being modelled or printed are moveable relative to each other. Various combinations are possible for moving the object on which the object is modelled relative to the printhead and vice versa.

The motions of the printhead and/or the base are controlled by a control system which controls a controllable positioning system to which the printhead and/or the base is attached. By means of software a pattern of tracks can be designed, which pattern is used for moving the printhead and for depositing the tracks of modelling material.

The object is created on a base structure in a reference location relative to the printhead. A preferred example of extrusion based modelling is fused deposition modelling (FDM), in which the modelling material fuses with previously formed tracks. The additive manufacturing material can be fed in the printhead in the form of for example solid filaments or rods, whereafter the modelling material is heated and liquified in the printhead. The printhead dispenses the liquified modelling material from the printhead through a nozzle and deposits it on the base in the form of tracks forming a layer or a slice of tracks, or, if a previous layer of the object to be created has been deposited, on the object on previously deposited tracks, which will be referred to as the substrate in the following. On the substrate the deposited material is allowed to solidify and fuse with the previously deposited tracks.

The relative motion of the base and object to the printhead in tracks and simultaneous deposition of modelling material from the printhead allow the fused deposition modelled object to grow with each deposited track and gradually attains its desired shape.

The additive manufacturing process takes place in a build room, which is essentially a sort of oven. A sufficiently high build room temperature is required to obtain a sufficiently strong interlayer bond between the substrate and the tracks deposited by the printhead. Depending on the modelling material used, the temperature in the build room may have different required temperatures, for example at least 80°C. In a preferred embodiment, the build room temperature is at least 130°C, at least 140°C, 150°C, 160°C, 170 °C more preferably at least 180°C, 190°C, 200°C, 210°C, 220°C, 230°C, 240°C, 250°C, 260°C, 270°C, for example between 180°C and 300°C, or between 220 and 280 °C.

In particular the invention relates to an extrusion based additive manufacturing apparatus comprising:
- a build room adapted to be heated to a temperature of at least 80°C,
- a temperature control system to control the gas temperature inside the build room,
- a base located in the build room to support an object to be manufactured,
- a printhead located in the build room for depositing modelling material to build the object to be manufactured, the printhead comprising a heating device to liquify the modelling material fed to the printhead in an initial solid state,
wherein the printhead and/or the base are coupled to a 3D positioning system to move the printhead and/or the base relative to each other, allowing to deposit tracks of modelling material to build the object to be manufactured.

The invention aims at providing an extrusion based additive manufacturing apparatus warranting the quality of the manufactured product.

This is achieved by an extrusion based additive manufacturing apparatus of the above-mentioned type, wherein the apparatus furthermore comprises at least one temperature sensor arranged at the printhead to capture the gas temperature in the vicinity of the printhead and thus the vicinity of the tracks deposited by the printhead.

The strength and aesthetic properties are both quality parameters of the manufactured product. These properties can be determined after the product is made, but for example the strength of an object may only be determined in a destructive manner, which is not possible for parts shipped to customers.

Reproducibility is sometimes difficult to guarantee in an additive manufacturing process wherein modelling material is deposited by a printhead. One reason is that in this extrusion based additive manufacturing process, which by nature is time consuming, the circumstances can be subject to significant spatial and temporal variations. The quality of one sample product may thus not be representative for the quality of other products having the same design.

It was found by the applicant that in general a relatively high build room temperature increases the strength of manufactured parts, while a relatively low build room temperature improves the aesthetics of manufactured parts. For building a certain object the build room temperature is kept within a certain temperature range such that both the strength and the aesthetic requirements can be met. It was found by the applicant that remaining near the lower limit of the temperature range offers parts with the best aesthetics. However, near the lower limit of the temperature range, in which the nominal temperature of the build room is kept, the risk of ending up outside the temperature range increases, due to the spatial and temporal variations in the circumstances inside the build room.

It is noted that the above mentioned quality of the aesthetics can comprise aspects such as:
- sharpness of corners in builded/printed objects;
- the overall appearance of porous structures (missing or closed pores);
- stringing, i.e. hair like wires undesired drawn by the printhead;
- roughness of lateral and top surfaces.

By arranging at least one temperature sensor at the printhead, which moves with the printhead through the build room, as proposed by the invention, and by generating temperature sensor data during the manufacturing process, a quality check of the manufactured product can be performed offline ("offline quality check") by checking in the sensor data afterwards if the temperature was within the required range during the entire build.

Moreover, it is possible to perform the quality check in real-time ("online quality check"), which provides the option to abort the building process if in real-time the sensor data indicates that the temperature is out of the range. In this way loss of manufacturing time and material is prevented.

A computer can be configured to perform a quality check on the manufactured object by comparing the temperature captured by the at least one temperature sensor with a predefined temperature range. The computer can perform the quality check in an automated way. The computer may be configured and arranged to perform an online quality check, i.e. in real-time during the manufacturing process and/or the computer may be configured and arranged to perform an offline quality check, i.e. afterwards after the object has been manufactured. The computer can be incorporated in the additive manufacturing apparatus, but it is also an option that the computer is remotely connected to the additive manufacturing apparatus.

In an embodiment the printhead has a dispensing nozzle and the at least one temperature sensor is arranged above the horizontal plane in which the dispensing nozzle is located. In practise the at least one temperature sensor needs to be only a few millimetres above the plane of the nozzle, whereby is prevented that the sensor bumps into projections on the upper surface of the printed object.

In a further embodiment a temperature sensor is arranged on opposite sides of the dispensing nozzle in said horizontal plane. In an example there may be arranged four sensors wherein, for example one pair of sensors is arranged in an X-direction and one pair of sensors in a Y-direction perpendicular to the X-direction.

In an embodiment the printhead is moveable and the at least one temperature sensor is connected to the printhead such that it moves with the printhead.

The feature of the invention that the at least one temperature sensor is arranged at the printhead must be understood as follows: the at least one temperature sensor is located in the vicinity of the printhead, in particular near the nozzle thereof such that the temperature near the deposited tracks of modelling material can be measured by the at least one temperature sensor. The way the sensor is mounted can vary. The at least one temperature sensor can for example be mounted to the printhead itself. However, in another embodiment the at least one temperature sensor is mounted to another part of the apparatus, such as a moveable carriage or stage that moves with the printhead. In an embodiment the printhead is also mounted to said moveable carriage or stage. Many variations in mounting the temperature sensor(s) are possible within the scope of the present invention.

In an embodiment the build room has an gas flow inlet and an gas flow outlet, which are connected to an gas circulation system adapted to provide an inflow of gas to the inlet and an outflow of gas from the build room through the outlet, said circulation system comprising a ventilator and a heating device which are connected to the temperature control system.

The invention furthermore relates to an extrusion based additive manufacturing method wherein:
- a build room is heated to a temperature of at least 80°C, and held at said temperature,
- an object is printed by a printhead in the build room by depositing tracks of modelling material to build the object to be manufactured,
   and wherein:
   the temperature inside the build room is captured in the vicinity of the printhead and thus the vicinity of the tracks deposited by the printhead by at least one temperature sensor,
   the captured temperatures are checked in a quality check procedure for the printed object.

Preferably, in the quality check procedure, the captured temperatures are compared with a predetermined temperature range

The quality check can be performed after the entire object is printed ("offline quality check").

Another option is that the quality check is performed real-time during printing ("online quality check"). This offers the option that the printing of the object is aborted when the temperature captured by the sensor is outside the predetermined temperature range. In the same manner, when multiple objects are printed in one print job, the printing of one of the objects can be aborted, while the printing of other in the same print job is continued.

In an embodiment the printhead is moved during printing and wherein the temperature sensor is moved with the printhead.

The invention will be elucidated further in the following detailed description with reference to the drawings, in which
Fig. 1 shows schematically a build room of an extrusion based additive manufacturing apparatus according to the invention,
Fig. 2 illustrates a temperature gradient in the build room of Fig.1,
Fig. 3 shows a side view of an object and a printhead with sensors next to the printhead of an embodiment of an extrusion based additive manufacturing apparatus according to the invention,
Fig. 4 shows a view from below of the printhead indicated by line C-C in Fig. 3 with sensors next to the printhead, and
Fig. 5 shows a side view of the object and the printhead indicated by line B-B in Fig. 4.

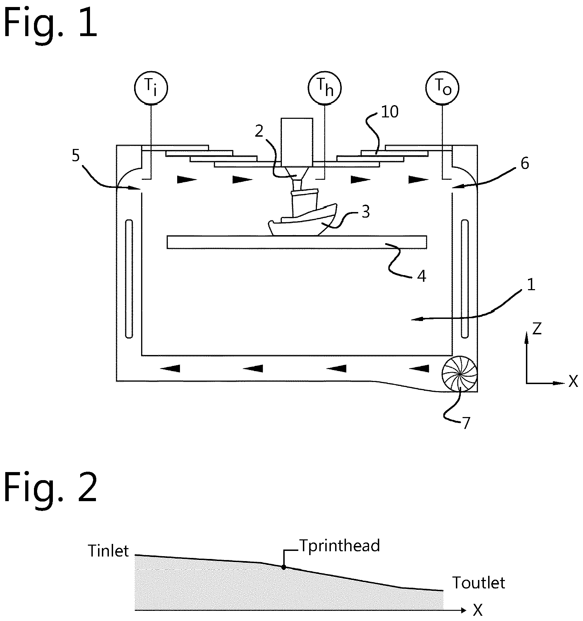

Fig. 1 shows a build room 1 of a Fused Deposition Manufacturing (FDM) apparatus. FDM is an extrusion based additive manufacturing method wherein modelling material is deposited by a printhead in tracks and fuses with previously formed tracks.

Fig. 1 shows a printhead 2 which builds an object 3 (in this example of Fig. 1 depicted as a miniature boat) positioned on a base 4. In this example the printhead 2 is moveable in a substantially horizontal XY plane. The base 4 is in this example stationary in the XY plane but is moveable in the vertical direction (Z-direction). It is noted here that this combination is only one of various possibilities to move the base 4 with object 3 and the printhead 2 relative to each other. The relative motion of the base 4 and object 3 to the printhead 2 in tracks and simultaneous deposition of modelling material from the printhead 2 allow the fused deposition modelled object 3 to grow with each deposited track and gradually attains its desired shape.

The printhead 2 extends through an adaptable heat shield 10, which closes of the upper side of the build room 1 to prevent that heat in the build room escapes towards the environment. The heat shield 10 comprises for instance moveable thermally insulating sheets partially overlapping each other, which are configured such that the printhead 2 is able to move, but at the same time the upper side of the build room 1 remains closed. The heat shield 10 can also be constructed using deformable bellows of thermally insulating material.

In order to allow a proper fusing between the modelling material currently deposited by the printhead 2 and the upper layer of the object 3, which is previously deposited, said upper layer of the object 3 needs to be preheated. Thereto the build room 1 has a heated gas circulation system which has a gas flow inlet 5 and a gas flow outlet 6. The gas flow moves from the inlet 5 to outlet 6 as is illustrated by the arrows at the top side of the build room 1. The gas used to circulate can be air, but can also be an inert gas or a clean/dry gas.

Fig. 2 shows a possible estimated temperature profile of the gas flow, which shows that the temperature at the inlet 5 (Tᵢₙₗₑₜ) is higher than the temperature at the outlet 6 (Tₒᵤₜₗₑₜ). When for example printing with PEEK as a modelling material, Tᵢₙₗₑₜ may be around 240°C and Tₒᵤₜₗₑₜ may be around 220 °C. The temperature T_{printhead} is an estimated temperature at the printhead based on the estimated temperature profile. The gas is recirculated by a circulation system comprising a ventilator 7 and a heating device (not shown) from the outlet 6 towards the inlet 5. By the gas circulation system which is controlled by a temperature control system, the temperature of the flow at the inlet (Tᵢₙₗₑₜ) can be controlled. In general this temperature is maintained at a constant value, which depends on the modelling material used for printing.

The modelling material is extruded from the printhead at a considerably higher temperature than the gas temperature. The extruded modelling material locally raises the temperature of the object 3 ( i.e. the substrate) and the heat of the extruded material dissipates into the object, whereby the extruded material and the material of the object may fuse

It was found by the applicant that in general a relatively high build room temperature increases the strength of manufactured parts, while a relatively low build room temperature improves the aesthetics of manufactured parts.

For building a certain object 3, the build room temperature is kept within a certain temperature range such that both the strength and the aesthetic requirements can be met. Thereto the temperature control system keeps the Tᵢₙₗₑₜ at a certain temperature. It was found by the applicant that in a FDM process in which the temperature of the build room 1 is kept near the lower limit of the temperature range, objects 3 with the best aesthetics can be manufactured. However, near the lower limit of the temperature range the risk of ending up outside the temperature range during the performing the FDM process increases, due to the spatial and temporal variations in the circumstances inside the build room 1.

The main cause of the spatial and temporal variations within the build room, which causes variations in temperature is the imperfect insulation of the moveable heat shield 10. Since heat flows through the ceiling as the gas is circulating from inlet 5 to outlet 6, the temperature of the gas drops as the gas travels though the build room 1. The actual amount of temperature drop depends a.o. on the temperature above the heat shield 10.

Another possible cause of the spatial and temporal variations within the build room, can be the printhead 2 which moves through the build room, and which disturbs the gas flow along the surface of the object 3. Also the shape of the object 3 may be a disturbing factor for the gas flow. Furthermore the printhead itself may radiate heat into the build room near the object. These disturbances may influence the quality of the object to an extent that the final product does not fulfil the quality standards, such as strength and appearance.

The invention proposes to provide at least one temperature sensor, indicated in Fig. 1 schematically by Tₕ, at the printhead 2. Such a temperature sensor can detect the local temperature near the printhead 2, which will generally be higher than the nominal temperature of the build room, because of the extrusion of hot modelling material (e.g. PEEK). This local temperature in the vicinity of the printhead 2 is more representative for the quality of the product than the nominal temperature in the build room 1.

The temperature sensor Tₕ in the example of Fig. 1 moves with the moveable printhead 2 and captures the temperature inside the build room 1 in the vicinity of the printhead 2 and thus the vicinity of the tracks of modelling material deposited by the printhead 2. The captured gas temperature can be checked in a quality check procedure for the printed object 3.

In the quality check procedure, the captured temperatures are compared with a predetermined temperature range. This can be done "offline" after the entire object 3 is printed, for example by checking a logged set of sensor data. The quality check can also be done "online", i.e. real-time during printing. In case of real-time checking, the printing of the object 3 may be aborted when the temperature captured by the temperature sensor is outside the predetermined temperature range. A computer can advantageously be used to perform the check procedure in an automated way.

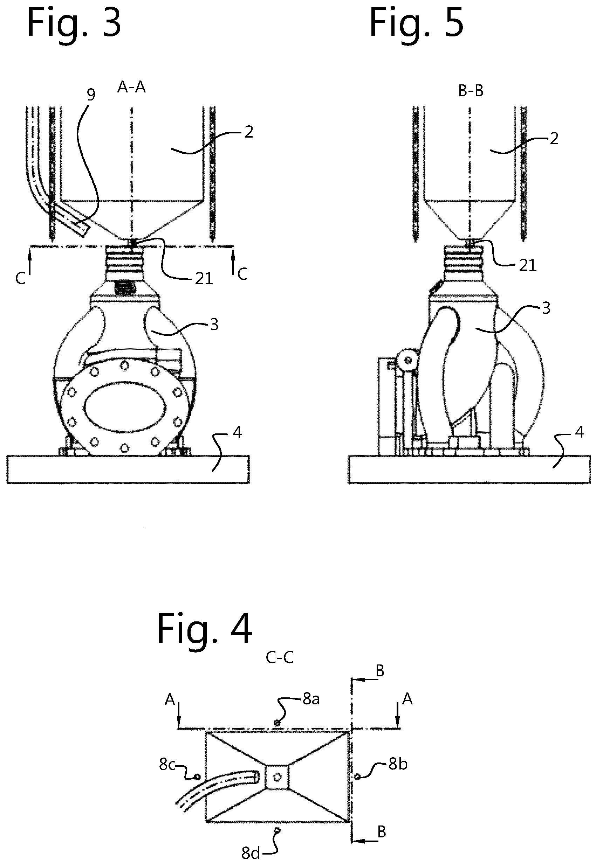

In Figs. 3-5 a more detailed example is shown of a possible embodiment of the printhead 2 with four temperature sensors 8a, 8b, 8c and 8d arranged near the printhead 2. In this example the object 3 is a manifold. The sensors 8a-8d may be attached to a carriage or stage which also holds the printhead, but the sensors 8a-8d may also be mounted to a separate stage. The printhead 2 has a printing nozzle 21. The temperature sensors 8a-8d are arranged in a horizontal plane, and the nozzle 21 is located in that plane or preferably slightly offset therefrom in the vertical direction (Z-direction), i.e. the nozzle 21 is located slightly below the plane in which the sensors 8a-8d are arranged, to prevent collision between the sensors 8a-8d and the object 3 that is printed as the printhead 2 moves in a horizontal plane. In this embodiment the nozzle 21 is located in the middle between the temperature sensors 8a and 8d and in the middle between the sensors 8b-8c. The temperature sensors 8a and 8d and the nozzle 21 are in this embodiment shown in Figs. 3-5 also in a common vertical plane which is substantially perpendicular to the flow direction of the gas flow from the inlet 5 to the outlet 6. The temperature sensors 8b and 8c and the nozzle 21 are in this embodiment of Figs. 3-5 also in a common vertical plane which is substantially parallel to the flow direction of the gas flow from the inlet 5 to the outlet 6.

In Figs. 3 and 4 also a conditioner 9 is shown. The conditioner 9 is a device adapted to blow cooling gas towards the location on the object 3 where the modelling material is deposited on the surface of the object 3.

By means of software a pattern of tracks can be designed, which pattern is used for moving the printhead 2 and for depositing the tracks of modelling material. The software, which runs on a computer, allows to virtually divide a designed 3D object 3 in slices, wherein in each slice a pattern of tracks is determined by the software. The pattern of tracks in each slice is used to move the printhead 2 and depositing the tracks of modelling material in each layer of the printed object 3. The movement and the dispensing of modelling material by the 3D printer is controlled by a control system based on the computer model developed by the above-mentioned software The conditioner 9 is controlled by the same control system. The software is adapted to determine when the printhead 2 resides relatively long in a small area, whereby the temperature in said area may rise outside the mentioned temperature range. The conditioner 9 may be used to blow away the heat such that the temperature remains in the desired range. By means of the temperature sensors 8a-8d and the temperatures captured by those sensors 8a-8d it is possible to retrospectively determine during a quality check if the temperature was kept within the desired range.

## Claims

1. Extrusion based additive manufacturing apparatus comprising:
- a build room adapted to be heated to a temperature of at least 80 °C,
- a temperature control system to control the gas temperature inside the build room,
- a base located in the build room to support an object to be manufactured,
- a printhead located in the build room for depositing modelling material to build the object to be manufactured, the printhead comprising a heating device to liquify the modelling material fed to the printhead in an initial solid state,
wherein the printhead and/or the base are coupled to a 3D positioning system to move the printhead and/or the base relative to each other, allowing to deposit tracks of modelling material to build the object to be manufactured,
**characterized in that** the apparatus furthermore comprises:
at least one temperature sensor arranged at the printhead to capture the temperature in the vicinity of the printhead and thus the vicinity of the tracks deposited by the printhead.

2. Extrusion based additive manufacturing apparatus according to claim 1, wherein a computer is connected to or incorporated in extrusion based manufacturing apparatus, wherein the computer is configured to perform an online or offline quality check on the manufactured object by comparing the temperature captured by the at least one temperature sensor with a predefined temperature range.

3. Extrusion based additive manufacturing apparatus according to claim 1 or 2, wherein the printhead has a dispensing nozzle and wherein the at least one temperature sensor is arranged above the horizontal plane in which the dispensing nozzle is located.

4. Extrusion based additive manufacturing apparatus according to claim 3, wherein in said horizontal plane a temperature sensor is arranged on opposite sides of the dispensing nozzle.

5. Extrusion based additive manufacturing apparatus according to anyone of the preceding claims, wherein the printhead is moveable and wherein the at least one temperature sensor is connected to the printhead such that it moves with the printhead.

6. Extrusion based additive manufacturing apparatus according to claim 4, wherein the printhead is mounted to a moveable carriage and wherein the at least one temperature sensor is also mounted to said moveable carriage.

7. Extrusion based additive manufacturing apparatus according to any of the preceding claims, wherein the build room has an gas flow inlet and an gas flow outlet, which are connected to an gas circulation system adapted to provide an inflow of gas to the inlet and an outflow of gas from the build room through the outlet, said circulation system comprising a ventilator and a heating device which are connected to the temperature control system.

8. Extrusion based additive manufacturing method wherein:
- a build room is heated to a temperature of at least 80 °C, and held at said temperature,
- an object is printed by a printhead in the build room by depositing tracks of modelling material to build the object to be manufactured,
**characterized in that:**
the temperature inside the build room is captured in the vicinity of the printhead and thus the vicinity of the tracks deposited by the printhead by at least one temperature sensor,
the captured temperatures are checked in a quality check procedure for the printed object.

9. Method according to claim 8, wherein in the quality check procedure, the captured temperatures are compared with a predetermined temperature range

10. Method according to claim 9, wherein the quality check is performed offline, i.e. after the entire object is printed.

11. Method according to claim 9, wherein the quality check is performed online, i.e. real-time during printing.

12. Method according to claim 11, wherein the printing of an object is aborted when the temperature captured by the sensor is outside the predetermined temperature range.

13. Method according to any of the claims 8-12, wherein the temperature captured by the at least one temperature sensor is logged into a log system.

14. Method according to claim 8, wherein the printhead is moved during printing and wherein the temperature sensor is moved with the printhead.
